# EUROPÄISCHE PATENTSCHRIFT

(11) **EP 1 881 297 B1**
(45) Veröffentlichungstag und Bekanntmachung des Hinweises auf die Patenterteilung: **05.11.2014**
(21) Anmeldenummer: 07111070.4
(22) Anmeldetag: 26.06.2007
(51) Int. Cl.: B29C 45/76

(54) **Sensor zur Verwendung bei einer Kunststoff verarbeitenden Maschine und Verfahren zum Betrieb eines solchen Sensors**
Sensor for use in a plastics processing machine and method for operating such a sensor
Capteur destiné à être utilisé avec une machine traitant le plastique et procédé de fonctionnement d'un tel capteur

(30) Priorität: 19.07.2006 DE 102006033421
(43) Veröffentlichungstag der Anmeldung: 23.01.2008
(73) Patentinhaber: KraussMaffei Technologies GmbH, 80997 München (DE)
(72) Erfinder: Urbanek, Otto, Dr., A-6370 Kitzbühel (AT)
(74) Vertreter: Wilhelm, Ludwig

(56) Entgegenhaltungen:
- EP-A- 0 897 786
- JP-A- 2001 165 899
- US-B1- 6 856 856

## Beschreibung

Die vorliegende Erfindung betrifft einen Sensor zur Verwendung bei einer Kunststoff verarbeitenden Maschine gemäß dem Oberbegriff des Anspruchs 1 sowie ein Verfahren zu dessen Betrieb.

Die vorliegende Erfindung beschäftigt sich insbesondere mit Mitteln zur Erkennung von abnormalen Zuständen bei Komponenten oder Maschinenteilen von Kunststoff verarbeitenden Maschinen, die auf eine Fehlfunktion, auf einen Verschleiß oder auf eine Wartungsnotwendigkeit hinweisen.

Seit einigen Jahren beschäftigt man sich in verschiedenen technischen Bereichen damit, abnormale Betriebszustände in Maschinen zu detektieren, die auf schadhafte Maschinenkomponenten oder eine zu erwartende Fehlfunktionen hindeuten. Auch wird es zunehmend gewünscht, besondere Service- und Wartungsarbeiten erkennen zu können, bevor tatsächlich Fehlfunktionen eintreten. Immerhin ist es erheblich günstiger, einen noch nicht aufgetretenen Schaden durch den Austausch eines potenziell bald ausfallenden Teiles während eines normalen Wartungs- oder Serviceintervalls zu vermeiden, als bei einem unerwarteten Ausfall eine erhebliche, nicht einkalkulierte Maschinenstandzeit in Kauf nehmen zu müssen.

Insbesondere in der Automobiltechnik laufen entsprechende Anstrengungen. Aber auch bei Kunststoff verarbeitenden Maschinen ist es von Vorteil, eine Fehlererkennung oder eine Fehlerfrüherkennung durchführen zu können. So ist es bereits bekannt, mobile Sensoren anzubringen, die beispielsweise Schwingungen detektieren und an eine zentrale Steuereinrichtung melden. Die Steuereinrichtung wertet dann aufgrund der eingehenden Signale sowie der in der Steuerung selbst vorliegenden Signale die einzelnen Daten mittels eines aufwändigen Verfahrens aus und überprüft den Maschinenzustand.

Allerdings wird bei dieser Vorgehensweise die Steuerung erheblich mit Rechenleistung beaufschlagt, so dass andere erforderliche Rechenoperationen für die Steuerung der Maschine im operativen Betrieb möglicherweise blockiert sind. Auch sind eine Vielzahl von Sensoren sowie maschinenspezifisch angepasste Algorithmen in der Steuerung recht kostenintensiv, so dass sich ein solcher Einsatz bisher nicht in großem Maße durchgesetzt hat.

Ein netzwerkfähiger Sensor mit bereits integrierter Elektronik ist in der EP 1 087 212 beschrieben. Dieser Sensor kann physikalische Größen Erfassen, analoge Signale erzeugen, diese in digitale Signale umwandeln, verarbeiten und an ein Netzwerk kommunizieren. Ein solcher Sensor kann als Einzellösung als integrierte Lösung mit anderen Controllern und Sensoren verwendet werden. Insbesondere sind Verwendungen für den Automobil- und Lastkraftwagen sowie Verbrennungsmotorbereich angegeben.

Aus den beiden Dokumenten DE 10 2004 052 499 A1 und WO 2005/052525 A2 sind Vorrichtungen und Verfahren zur Optimierung von Zykluszeiten bei Spritzgießverfahren bekannt. Dabei wird gemäß der WO 2005/052525 A2 ein System zur Erfassung der Temperatur eines in einem Werkzeug produzierten Werkstücks vorgeschlagen. Je nach Werkstücktemperatur kann der Zeitpunkt für die Werkzeugöffnung vorgezogen oder verzögert werden. Bei der DE 10 2004 052 499 A1 ist ein Sensor in einem Spritzgießwerkzeug integriert. Dieser Sensor kommuniziert mit einer Auswerteelektronik. Dadurch ist es möglich, die Qualität der Werkstücke wie auch das Spritzgießverfahren selbst zu überwachen und evtl. optimieren.

Aufgabe der vorliegenden Erfindung ist es daher, eine kostengünstige Möglichkeit zur Fehlererkennung oder Fehlerfrüherkennung von Maschinenkomponenten anzugeben, ohne dass die Kapazität der Steuereinrichtung in negativer Weise beeinflusst wird.

Diese Aufgabe wird durch die Merkmale des im Anspruch 1 angegebenen Sensors sowie des im Anspruch 13 angegebene Verfahren gelöst.

Ein Gedanke der vorliegenden Erfindung ist darin zu sehen, dass für ein zu überwachendes Maschinenteil ein kostengünstiger Sensor mit einer integrierten Auswerteeinrichtung vorgesehen ist. Die Auswerteeinrichtung enthält einen einfachen Algorithmus, der das von dem Sensor zur Verfügung gestellte Signal evtl. vorverarbeitet, mit einer hinterlegten Information vergleicht und aufgrund des Vergleichsergebnisses bei einem Abnormalwert ein Fehlersignal erzeugt, das auf den Fehler oder den zu erwartenden Fehler hinweist. Diese Information wird an die Steuereinrichtung der Maschine weitergegeben.

Dabei ordnet die Auswerteeinrichtung die Vergleichsergebnisse entsprechend einer Klassifikationstabelle ein, so dass nicht nur 0/1-Ergebnisse (also fehlerhaft oder nicht fehlerhaft), sondern auch Abstufungen in der Bewertung oder den Bewertungen enthalten sind. So ist es beispielsweise möglich, dass bei einer Klassifikation eine Information generiert wird, wonach der Zustand zwar noch nicht als fehlerhaft, aber auch nicht mehr als in Ordnung oder problembehaftet angesehen werden kann. Diese Information könnte bei Wartungsarbeiten ausgelesen und ausgewertet werden, so dass erforderlichenfalls die notwendigen Schritte, wie der Austausch eines Teils vorgenommen werden können. Auch ist es möglich, vor einer anstehenden noch durchzuführenden Wartung die einzelnen Sensoren per Fernabfrage abzufragen, um deren Klassifikation zu erfahren. Vorbereitend können dann bereits die evtl. auszutauschenden Teile bei der Wartung mitgenommen und verwendet werden, bei denen ein Hinweis auf eine mögliche bald zu erwartende Fehlerhaftigkeit vorliegt.

Der Sensor selbst ist bzgl. der Fehlererkennung oder der Fehlerfrüherkennung autark und liefert dann ein Signal an die Steuereinrichtung, wenn ein Fehler entsprechend einer vorbestimmten Kategorisierung erkannt oder erwartet (Fehlerfrüherkennung) wird. In diesem Fall wird ein entsprechendes Signal an die Steuereinrichtung abgegeben, die daher im Regelfall nicht kontinuierlich mit Signalen von diesem Sensor beaufschlagt ist. Die jeweilige Auswerteeinrichtung kann in fest verschalteter Weise und angepasst auf das jeweilige Arbeitsgebiet bzw. die zu überwachende Einrichtung ausgebildet sein. Eine irgendwie geartete Anpassung der Steuereinrichtung ist hingegen nicht notwendig. Auch bedarf es keines eigenen Algorithmus in der Steuereinrichtung, um die Fehlererkennung oder Fehlerfrüherkennung durchführen zu können.

Vorzugsweise sind Speichereinrichtungen im Sensor bzw. in der Auswerteeinrichtung vorgesehen, die beispielsweise ein hinterlegtes Signal oder den zeitlichen Verlauf eines detektierten Signals abspeichern. Auch die Vergleichsergebnisse oder die Fehlermeldungen selbst könnten im Sensor bzw. in der Auswerteelektronik abgespeichert werden. In einem solchen Fall können die Speicher der Sensoren bei einer routinemäßigen Servicearbeit ausgelesen und ausgewertet werden. Auch wenn es noch keine Fehlermeldung an die Steuereinrichtung gegeben hat, kann dann der Zustand der jeweiligen Einheit überprüft werden, insbesondere dann, wenn die Vergleichsergebnisse kategorisiert werden.

In der Auswerteeinrichtung ist ein dem jeweiligen Anwendungsfall zugeordnetes Vergleichssignal hinterlegt, welches die Auswerteeinrichtung mit dem detektierten Signal vergleicht. Überdies können weitere Kriterien hinterlegt sein, die in Abhängigkeit vom Vergleichsergebnis einen Abnormalzustand feststellen oder kennzeichnen. Der Sensor kann dabei beispielsweise Schwingungen wie Materialschwingungen, Schall oder Vibrationen erfassen aber auch andere physikalische Größen wie Temperatur, Druck, Strom, Spannung etc.

Die Auswerteeinrichtung kann auch derart ausgebildet sein, dass das zu detektierende Signal kontinuierlich über einen festgelegten Zeitraum aufgezeichnet wird. Das hinterlegte Vergleichssignal sollte dann natürlich ebenfalls über diesen festgelegten Zeitraum reichen. Diese Vorgehensweise kann insbesondere dann interessant sein, wenn zyklisch variierende Signalfolgen, wie beim Betrieb einer Spritzgießmaschine, abzuprüfen sind.

Zudem kann der Sensor mit einem Eingang zur Einspeisung eines Eingangssignals vorgesehen sein. Dieses Eingangssignal kann sowohl zur Triggerung der Detektion des Sensors selbst verwendet werden, wie auch zur Modifizierung des detektierten Signals, wie auch zur Kategorisierung des Vergleichsergebnisses, wie auch zur Modifizierung des abgespeicherten Signals. Beispielsweise kann bei einem zyklischen Betrieb einer Spritzgießmaschine das Eingangssignal als Starttriggerung dienen, zu einem jeweils ganz bestimmten Verfahrenszeitpunkt eine Erfassung der physikalischen Größe, beispielsweise eine Schwingungsaufnahme, durchzuführen. Auch bei unterschiedlichen Betriebszuständen kann das Eingangssignal verwendet werden, und zwar zur Modifizierung der detektierten Signale. So kann z. B. eine Filterung, eine Stauchung, eine Normierung des Signals in Abhängigkeit vom Eingangssignal erfolgen. Das Eingangssignal kann dabei beispielsweise die Drehzahl eines Motors angeben, welche sicherlich einen Einfluss auf das Schwingungsverhalten des dem Motor zugeordneten Bauteils hat. Das Eingangssignal könnte aber auch zur Veränderung des Vergleichssignals dienen, so dass dieses auf der Basis des Eingangssignals abgeändert wird. Das Eingangssignal kann dabei von der Steuerung selbst oder aber einem anderen Sensor stammen.

Das Vergleichssignal kann aber nicht nur aufgrund des Eingangssignals, sondern auch über die Zeit bzw. in Abhängigkeit vom detektierten Signal geändert werden. Insbesondere hinsichtlich der Änderung des Vergleichssignals in Bezug zur Zeit oder in Abhängigkeit von einem detektierten Signals kann eine Lerneigenschaft realisiert werden. So ändern sich beispielsweise bei Getrieben oder Plastifiziereinrichtungen die Schwingungszustände mit der Betriebsdauer sowie dem Abnutzungsgrad der jeweiligen Einheiten. Diese Änderung der Schwingungszustände und Frequenzmuster müssen aber nicht unbedingt auf einen Fehler zurückzuführen sein.

Um das Vergleichsergebnis oder den kategorisierten Vergleichswert an eine Steuereinrichtung zu übermitteln, kann der Sensor mit einer Übermittlungseinrichtung ausgestattet sein. Diese Übermittlungseinrichtung kann drahtgebunden oder -los ausgeführt sein. Letzteres ist insbesondere bei großbauenden Anlagen, bei denen ansonsten lange Verbindungsleitungen erforderlich wären, sinnvoll.

Die vorliegende Erfindung wird nachfolgend anhand einer Ausführungsform und mit Bezug auf die beiliegenden Zeichnungen näher erläutert. Die Zeichnungen zeigen in
- Figur 1: eine schematische Darstellung einer Spritzgießmaschine mit erfindungsgemäßen Sensoren,
- Figur 2: eine schematische Darstellung eines erfindungsgemäßen Sensors mit integrierter Auswerteelektronik und
- Figur 3: eine schematische Darstellung der Funktionseinheiten der Auswerteelektronik.

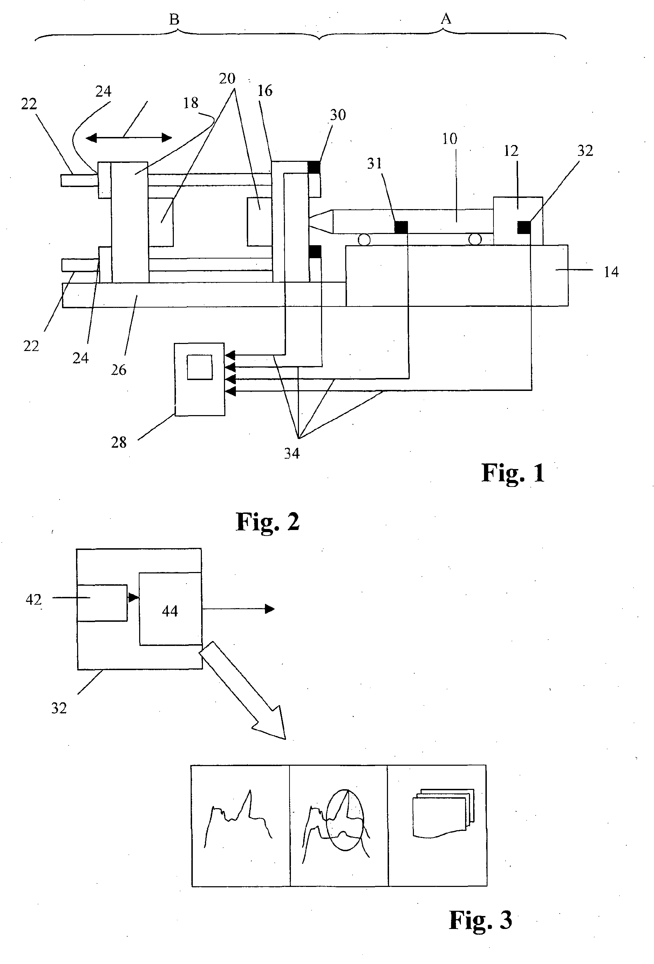

In Figur 1 ist eine schematische Darstellung einer Spritzgießmaschine mit einer Plastifiziereinheit sowie einer Schließeinheit gezeigt, die in den Bereichen A (Plastifiziereinheit) bzw. B (Schließeinheit) angeordnet sind. Die Plastifiziereinheit aus dem Bereich A umfasst einen auf einem Maschinenbett 14 hin und her beweglich gelagerten Plastifizierzylinder 10, der an seinem hinteren Ende einen elektrischen Antrieb 12 umfasst. Die Schließeinheit aus dem Bereich B weist in bekannter Weise zwei Formaufspannplatten, nämlich eine feste Formaufspannplatte 16 sowie eine bewegliche Formaufspannplatte 18 auf, an denen jeweils eine Werkzeughälfte 20 befestigt ist. Die Formaufspannplatten 18 sind von vier Holmen 22 durchsetzt, von denen in Figur 1 nur zwei zu erkennen sind. Gegenüber den Holmen 22 ist die bewegliche Formaufspannplatte 18 über die Verriegelungselemente 24 festsetzbar, so dass im geschlossenen Zustand der Schließeinheit mit an der festen Aufspannplatte angeordneten, hydraulischen Druckkissen ein Schließdruck aufgebracht werden kann. An den beiden Druckkissen sowie am Plastifizierzylinder 10 wie auch am elektrischen Antrieb 12 sind jeweils Sensoren 30, 31 und 32 befestigt.

Der Sensor 30 nimmt den Hydraulikdruck am Schließzylinder auf. Der Sensor 31 erfasst die Schwingungen des betriebenen Plastifizierzylinders und der Sensor 32 erfasst die Schwingungen des elektrischen Antriebs 12.

Wie nachfolgend noch erläutert wird, wandeln die Sensoren die erfassten physikalischen Größen in elektrische Signale um, verarbeiten diese intern und stellen sie einer integrierten Auswerteeinrichtung zur Verfügung. Lediglich dann, wenn die vorzugsweise mit einem einfachen Algorithmus versehene Auswerteeinrichtung eine Abnormalität detektiert, wird diese Information über zugeordnete Signalleitungen 34 an eine Steuerung 28 weitergegeben. Wird keine Abnormalität von einem eigenständig arbeitenden Sensor detektiert, so wird kein Signal an die Steuerung 28 abgegeben.

Darüber hinaus kann das Signal ein Signal von der Auswerteeinrichtung dann an die Steuerung 28 abgegeben werden, wenn es von dieser angefordert wird.

Der schematische Aufbau eines Sensors 32 ist in Figur 2 dargestellt. Der Sensor 32 besitzt einen Sensorfühler 42, welcher die (jeweilige) physikalische Größe detektiert. Er erfasst nicht nur die physikalische Größe, sondern wandelt diese auch in ein entsprechendes elektrisches Signal um und gibt das elektrische Signal an eine Auswerteeinrichtung 44 weiter, die mit dem Sensor 32 integriert ausgebildet ist.

Die Auswerteeinrichtung 44 umfasst beispielsweise, wie dies durch den Pfeil auf Figur 3 symbolisiert sein soll, eine Signalverarbeitungseinrichtung, die eine Fourier-Transformation, eine Normierung sowie eine Drehzahlanpassung vornimmt, um so das durch den Sensor ermittelte Frequenzspektrum in eine vergleichbare Form zu bringen. Anschließend wird das detektierte und über die Auswerteeinrichtung bearbeitete Signal mit einem hinterlegten, in der Auswerteeinrichtung 44 gespeicherten Signal verglichen und die Abweichungen ermittelt.

Die Abweichungen werden dann mit einem - ebenfalls hinterlegten -Kriterienkatalog verglichen. Entsprechend den Vergleichsergebnissen wird eine Kategorisierung vorgenommen. Dies bedeutet, dass jedem Vergleich eine bestimmte Fehlerkategorie zugeordnet wird. Wird ein bestimmter Wert überschritten oder der Wert in eine vorgegebene Kategorie eingeteilt, so gibt der Sensor 32 ein Signal an die Steuerung 28 der Spritzgießmaschine ab. Nur im Fall eines Signals für einen abnormalen Maschinenteilzustand erhält die Steuerung der Spritzgießmaschine diese Information und kann evtl. eine entsprechend hinterlegte Anordnung ausführen. Diese Anordnung kann wie üblich in einem akustischen oder optischen Alarm oder die Aktivierung einer Fehlermeldung in ein Überwachungszentrum sein. Natürlich können auch über Fernleitungen Informationen an Überwachungszentren verschickt werden.

Überdies ist es vorteilhaft, wenn Speichermöglichkeiten in der Auswerteelektronik vorhanden sind. So können verschiedene auf die jeweilige Nutzung angepasste Vergleichssignale hinterlegt werden. Auch ist es möglich, Signalverläufe abzulegen und erst nach Abschluss einer zeitlichen Erfassungsperiode einen Vergleich durchzuführen.

Aufgrund der derart kompakt gestalteten, autark arbeitenden Sensoren mit Fühler und integrierter Auswerteelektronik, die z. T. auch fest verdrahtet sein kann, können die Sensoren relativ günstig hergestellt werden. Dies ist eine Voraussetzung dafür, dass sie sich im Markt auch durchsetzen.

### Bezugszeichenliste

- A: Bereich der Plastifiziereinheit
- B: Bereich der Schließeinheit

- 10: Plastifizierzylinder
- 12: Elektrischer Antrieb
- 14: Maschinenbett für Plastifiziereinheit
- 16: Feste Aufspannplatte
- 18: Bewegliche Aufspannplatte
- 20: Werkzeug
- 22: Holm
- 24: Verriegelungseinrichtung
- 26: Maschinenbett für Schließeinheit
- 28: Steuerung
- 30: Sensor 1
- 31: Sensor 2
- 32: Sensor 3
- 34: Signalleitungen zur Steuerung
- 42: Sensorfühler
- 44: Auswerteeinheit
- 46: Verarbeitungseinheit
- 48: Kategorisierungseinheit

## Patentansprüche

1. Sensor (32) zur Verwendung bei einer kunststoffverarbeitenden Maschine, insbesondere bei einer Spritzgieß- oder einer Extrusionsmaschine, umfassend einen Fühler (42) zur Detektion einer physikalischen Größe eines zu überwachenden Maschinenteils und geeignet zur Umwandlung dieser Größe in ein elektrisches Signal sowie eine in den Sensor integrierte Auswerteeinrichtung (44), die das Signal vom Sensor erhält,
wobei die Auswerteeinrichtung (44) geeignet ist, ein von einem hinterlegten Normalwert abweichendes Signal zu erkennen,
**dadurch gekennzeichnet,**
**dass** in der Auswerteeinrichtung (44) eine Information hinterlegt ist, die Auswerteeinrichtung (44) zum Vergleich des detektierten Signals mit der hinterlegten Information ausgebildet ist,
**dass** die Auswerteeinrichtung (44) eine Klassifikationstabelle enthält und geeignet ist,
- das Vergleichsergebnis zwischen dem detektierten Signal und der hinterlegten Information in Kategorien einzuteilen und
- bei der Einteilung in eine vorgegebene Kategorie ein Fehlersignal zu erzeugen, welches auf den Fehler oder den zu erwartenden Fehler des überwachten Maschinenteils hinweist, und an eine Steuereinheit (28) abzuschicken.

2. Sensor nach Anspruch 1,
**dadurch gekennzeichnet,**
**dass** der Sensor zur Detektion von Schwingungen, Temperatur, Druck oder elektrischer Größen geeignet ist.

3. Sensor nach einem der vorhergehenden Ansprüche 1 oder 2,
**dadurch gekennzeichnet,**
**dass** die Auswerteeinrichtung (44) ausgebildet ist, um das zu detektierende Signal über einen festgelegten Zeitraum aufzuzeichnen, wobei das hinterlegte Signal ebenfalls über einen entsprechenden Zeitraum gespeichert ist.

4. Sensor nach einem der vorhergehenden Ansprüchen,
**dadurch gekennzeichnet,**
**dass** die Auswerteeinrichtung (44) zumindest einen Eingang zur Zuführung zumindest eines Eingangssignals aufweist.

5. Sensor nach Anspruch 4,
**dadurch gekennzeichnet,**
**dass** das zumindest eine Eingangssignal zur Bestimmung des Detektionszeitpunktes für das zu detektierende Signal verwendet ist.

6. Sensor nach Anspruch 4 oder 5,
**dadurch gekennzeichnet,**
**dass** das zumindest eine Eingangssignal zur Modifizierung des detektierten Signals verwendet ist.

7. Sensor nach einem der Ansprüche 4 bis 6,
**dadurch gekennzeichnet,**
**dass** das zumindest eine Eingangssignal zur Kategorisierung des Vergleichsergebnisses zwischen dem detektierten und dem hinterlegten Signal verwendet ist.

8. Sensor nach einem der vorhergehenden Ansprüche,
**dadurch gekennzeichnet,**
**dass** eine Modifikationseinrichtung in der Auswerteeinrichtung vorgesehen ist, mit der das hinterlegte Vergleichssignal über die Zeit änderbar ist.

9. Sensor nach Anspruch 8,
**dadurch gekennzeichnet,**
**dass** die Modifikationseinrichtung das Vergleichssignal auf der Basis der ermittelten Zeit ändert.

10. Sensor nach Anspruch 7 oder 9,
**dadurch gekennzeichnet,**
**dass** die Modifikationseinrichtung das Vergleichssignal aufgrund des detektierten Signals ändert.

11. Sensor nach einem der vorhergehenden Ansprüche,
**dadurch gekennzeichnet,**
**dass** eine Übermittlungseinrichtung im Sensor vorgesehen ist, mit der das Vergleichsergebnis oder die Kategorisierung des Vergleichsergebnisses oder eine Fehlermeldung an eine Steuereinrichtung übermittelbar ist.

12. Sensor nach Anspruch 11,
**dadurch gekennzeichnet,**
**dass** die Übermittlungseinrichtung zur drahtlosen Übermittlung ausgebildet ist.

13. Verfahren zum Betrieb eines Sensors gemäß den Ansprüchen 1 bis 12,
**dadurch gekennzeichnet,**
**dass** eine physikalische Größe eines zu überwachenden Maschinenteils von einem Fühler erfasst und in ein elektrisches Signal umgewandelt wird,
**dass** das elektrische Signal mit einer hinterlegten Information verglichen wird, dass aufgrund des Vergleichsergebnisses eine Kategorisierung des elektrischen Signals vorgenommen wird und
**dass** ein Fehlersignal, welches auf den Fehler oder den zu erwartenden Fehler des überwachten Maschinenteils hinweist, dann erzeugt und an eine Steuereinheit ausgegeben wird, wenn das Vergleichsergebnis in eine vorgegebene Kategorie eingeteilt wird.

14. Verfahren nach Anspruch 13,
**dadurch gekennzeichnet,**
**dass** das elektrische Signal vor dem Vergleichsschritt verarbeitet wird.

15. Verfahren nach Anspruch 13 oder 14,
**dadurch gekennzeichnet,**
**dass** eine Signalverarbeitung vorgesehen ist, die eine Fourier-Transformation, eine Normierung, eine Skalierung oder eine Filterung umfasst.

16. Verfahren nach einem der Ansprüche 15 bis 17,
**dadurch gekennzeichnet,**
**dass** dem Sensor ein Inputsignal zugeführt wird und dass der Betrieb des Sensorfühlers in Abhängigkeit von dem Inputsignal gesteuert wird.

17. Verfahren nach einem der Ansprüche 13 bis 16,
**dadurch gekennzeichnet,**
**dass** dem Sensor ein Inputsignal zugeführt wird und dass die Signalverarbeitung in Abhängigkeit vom Inputsignal durchgeführt wird.

18. Verfahren nach einem der Ansprüche 13 bis 17,
**dadurch gekennzeichnet,**
**dass** dem Sensor ein Inputsignal zugeführt wird und dass die Kategorisierung in Abhängigkeit vom Inputsignal durchgeführt wird.

19. Verfahren nach einem der vorhergehenden Ansprüche 13 bis 18,
**dadurch gekennzeichnet,**
**dass** das hinterlegte Vergleichssignal in Abhängigkeit von dem Inputsignal verändert wird.

20. Verfahren nach einem der Ansprüche 13 bis 19,
**dadurch gekennzeichnet,**
**dass** das hinterlegte Vergleichssignal über die Zeit verändert wird.

21. Verfahren nach einem der Ansprüche 13 bis 20,
**dadurch gekennzeichnet,**
**dass** das hinterlegte Vergleichssignal aufgrund des detektierten Signals verändert wird.

## Claims

1. A sensor (32) for use in a plastics processing machine, in particular in an injection moulding or extrusion machine, comprising a probe (42) for the detection of a physical value of a machine part which is to be monitored and suitable for the conversion of this value into an electrical signal, and an evaluation device (44), integrated into the sensor, which receives the signal from the sensor,
wherein the evaluation device (44) is suitable to detect a signal deviating from a stored standard value,
**characterized in that**
an information is stored in the evaluation device (44), the evaluation device (44) is constructed for comparison of the detected signal with the stored information,
the evaluation device (44) contains a classification table and is suitable
- to classify the comparison result between the detected signal and the stored information into categories,
- to generate an error signal during the classifying into a predetermined category, which error signal indicates the error or the error to be expected of the monitored machine part, and to send it to a control unit (28).

2. The sensor according to Claim 1, **characterized in that** the sensor is suitable for the detection of oscillations, temperature, pressure or electric variables.

3. The sensor according to one of the preceding Claims 1 or 2, **characterized in that** the evaluation device (44) is constructed in order to record the signal which is to be detected over a specified period of time, wherein the stored signal is likewise stored over a corresponding period of time.

4. The sensor according to one of the preceding claims, **characterized in that** the evaluation device (44) has at least one input for the feeding of at least one input signal.

5. The sensor according to Claim 4, **characterized in that** the at least one input signal is used for determining the detection instant for the signal which is to be detected.

6. The sensor according to Claim 4 or 5, **characterized in that** the at least one input signal is used for modification of the detected signal.

7. The sensor according to one of Claims 4 to 6, **characterized in that** the at least one input signal is used for categorising the comparison result between the detected signal and the stored signal.

8. The sensor according to one of the preceding claims, **characterized in that** a modification device is provided in the evaluation device, by which the stored comparison signal is able to be altered over time.

9. The sensor according to Claim 8, **characterized in that** the modification device alters the comparison signal on the basis of the determined time.

10. The sensor according to Claim 7 or 9, **characterized in that** the modification device alters the comparison signal on the basis of the detected signal.

11. The sensor according to one of the preceding claims, **characterized in that** a transmission device is provided in the sensor, by which the comparison result or the categorisation of the comparison result or an error indication is able to be transmitted to a control device.

12. The sensor according to Claim 11, **characterized in that** the transmission device is configured for wireless transmission.

13. A method for operating a sensor according to Claims 1 to 12,
**characterized in that**
a physical value of a machine part which is to be monitored is detected by a probe and is converted into an electrical signal,
the electrical signal is compared with a stored information,
on the basis of a comparison result, a categorisation of the electrical signal is carried out and
an error signal, which indicates the error or the error to be expected of the monitored machine part, is then generated and emitted to a control unit, when the comparison result is classified into a predetermined category.

14. The method according to Claim 13, **characterized in that** the electrical signal is processed before the comparison step.

15. The method according to Claim 13 or 14, **characterized in that** a signal processing is provided, which comprises a Fourier transformation, a standardisation, a scaling or a filtering.

16. The method according to one of Claims 15 to 17, **characterized in that** an input signal is fed to the sensor and that the operation of the sensor probe is controlled as a function of the input signal.

17. The method according to one of Claims 13 to 16, **characterized in that** an input signal is fed to the sensor and that the signal processing is carried out as function of the input signal.

18. The method according to one of Claims 13 to 17, **characterized in that** an input signal is fed to the sensor and that the categorisation is carried out as a function of the input signal.

19. The method according to one of the preceding Claims 13 to 18, **characterized in that** the stored comparison signal is altered as a function of the input signal.

20. The method according to one of Claims 13 to 19, **characterized in that** the stored comparison signal is altered over time.

21. The method according to one of Claims 13 to 20, **characterized in that** the stored comparison signal is altered on the basis of the detected signal.

## Revendications

1. Capteur (32) destiné à l'utilisation dans une machine d'usinage du plastique, en particulier une machine de moulage par injection ou d'extrusion, comprenant une sonde (42) pour détecter une grandeur physique d'une pièce de machine à surveiller et approprié pour convertir cette grandeur en un signal électrique, ainsi qu'un dispositif d'évaluation (44) intégré dans le capteur, qui reçoit le signal du capteur,
sachant que le dispositif d'évaluation (44) est approprié pour reconnaître un signal s'écartant d'une valeur normale consignée,
**caractérisé en ce**
**qu'**une information est consignée dans le dispositif d'évaluation (44), que le dispositif d'évaluation (44) est conçu pour comparer le signal détecté à l'information consignée,
**que** le dispositif d'évaluation (44) contient un tableau de classification et est approprié,
- pour classer le résultat de comparaison entre le signal détecté et l'information consignée en catégories et
- lors du classement dans une catégorie prédéfinie, pour produire un signal d'erreur qui indique l'erreur ou l'erreur à prévoir de la pièce de machine surveillée, et pour l'envoyer à une unité de commande (28).

2. Capteur selon la revendication 1, **caractérisé en ce que** le capteur est approprié pour détecter des oscillations, la température, une pression ou des grandeurs électriques.

3. Capteur selon la revendication 1 ou 2, **caractérisé en ce que** le dispositif d'évaluation (44) est conçu pour enregistrer le signal à détecter sur une période définie, sachant que le signal consigné est également mémorisé sur une période correspondante.

4. Capteur selon l'une des revendications précédentes, **caractérisé en ce que** le dispositif d'évaluation (44) présente au moins une entrée pour amener au moins un signal d'entrée.

5. Capteur selon la revendication 4, **caractérisé en ce que** l'au moins un signal d'entrée est employé pour déterminer l'instant de détection pour le signal à détecter.

6. Capteur selon la revendication 4 ou 5, **caractérisé en ce que** l'au moins un signal d'entrée est employé pour modifier le signal détecté.

7. Capteur selon l'une des revendications 4 à 6, **caractérisé en ce que** l'au moins un signal d'entrée est employé pour catégoriser le résultat de comparaison entre le signal détecté et le signal consigné.

8. Capteur selon l'une des revendications précédentes, **caractérisé en ce qu'**un dispositif de modification est prévu dans le dispositif d'évaluation, avec lequel le signal de comparaison consigné est modifiable dans le temps.

9. Capteur selon la revendication 8, **caractérisé en ce que** le dispositif de modification modifie le signal de comparaison en se basant sur le temps calculé.

10. Capteur selon la revendication 7 ou 9, **caractérisé en ce que** le dispositif de modification modifie le signal de comparaison du fait du signal détecté.

11. Capteur selon l'une des revendications précédentes, **caractérisé en ce qu'**un dispositif de transmission est prévu dans le capteur, avec lequel le résultat de comparaison ou la catégorisation du résultat de comparaison ou un message d'erreur peut être transmis(e) à un dispositif de commande.

12. Capteur selon la revendication 11, **caractérisé en ce que** le dispositif de transmission est conçu pour la transmission sans fil.

13. Procédé destiné au fonctionnement d'un capteur selon l'une des revendications 1 à 12, **caractérisé en ce qu'**une grandeur physique d'une pièce de machine à surveiller est détectée par une sonde et qu'un signal électrique est converti, que le signal électrique est comparé à une information consignée, qu'une catégorisation du signal électrique est effectuée du fait du résultat de comparaison et qu'un signal d'erreur qui indique l'erreur ou l'erreur à prévoir de la partie de machine surveillée, est alors produit et envoyé à une unité de commande lorsque le résultat de la comparaison est classé dans une catégorie prédéfinie.

14. Procédé selon la revendication 13, **caractérisé en ce que** le signal électrique est traité avant l'étape de comparaison.

15. Procédé selon la revendication 13 ou 14, **caractérisé en ce qu'**un traitement de signal est prévu, qui comprend une transformation de Fourier, une normalisation, une mise à l'échelle ou un filtrage.

16. Procédé selon l'une des revendications 15 à 17, **caractérisé en ce qu'**un signal d'entrée est amené au capteur et que le fonctionnement de la sonde du capteur est commandé en fonction du signal d'entrée.

17. Procédé selon l'une des revendications 13 à 16, **caractérisé en ce qu'**un signal d'entrée est amené au capteur et que le traitement du signal est effectué en fonction du signal d'entrée.

18. Procédé selon l'une des revendications 13 à 17, **caractérisé en ce qu'**un signal d'entrée est amené au capteur et que la catégorisation est effectuée en fonction du signal d'entrée.

19. Procédé selon l'une des revendications 13 à 18, **caractérisé en ce que** le signal de comparaison consigné est modifié en fonction du signal d'entrée.

20. Procédé selon l'une des revendications 13 à 19, **caractérisé en ce que** le signal de comparaison consigné est modifié dans le temps.

21. Procédé selon l'une des revendications 13 à 20, **caractérisé en ce que** le signal de comparaison consigné est modifié du fait du signal détecté.
